# DEMANDE DE BREVET EUROPEEN

(11) **EP 1 441 289 A1**
(43) Date de publication de la demande: **28.07.2004**
(21) Numéro de dépôt: 03300283.3
(22) Date de dépôt: 23.12.2003
(51) Int. Cl.: G06F 9/50

(54) **Allocation de ressources informatiques, électroniques et/ou de communication**

(30) Priorité: 31.12.2002 FR 0216921
(71) Demandeur: Eloquant SA, 38420 Le Versoud (FR)
(72) Inventeur: Wyld, Brian, 38190 Brignoud (FR)
(74) Mandataire: de Beaumont, Michel

(57) **Abrégé**

L'invention concerne un dispositif hôte (20) comportant des ressources informatiques, électroniques et/ou de communication (D0), destiné à allouer une quantité déterminée de ressources à un utilisateur (N1 à N8) initial ayant transmis une requête d'allocation, comprenant des premières ressources (D1 à D4, D6, D7) réservées aux utilisateurs et des secondes ressources réparties en zones de ressources (AM'1 à AM'8) ; un pointeur désignant pour chaque utilisateur un autre utilisateur ou une zone de ressources et pour chaque zone de ressources, une autre zone de ressources ; et un moyen pour allouer des ressources disponibles de l'utilisateur ou de la zone de ressources désigné par le pointeur de l'utilisateur initial, et, lorsque la requête d'allocation n'est toujours pas satisfaite, pour allouer successivement des ressources disponibles de l'utilisateur ou de la zone de ressources désigné par le dernier pointeur jusqu'à satisfaire la requête d'allocation ou émettre un message de refus d'allocation.

## Description

La présente invention concerne un procédé d'allocation de ressources informatiques, électroniques et/ou de communication à des utilisateurs par un serveur de ressources, et un serveur de ressources pour la mise en oeuvre d'un tel procédé d'allocation.

Par ressources informatiques, électroniques et/ou de communication, on entend par exemple de la bande passante pour la transmission de signaux électromagnétiques, de la place mémoire pour le stockage de données, des ports téléphoniques pour la mise en communication téléphonique de correspondants, de la charge de calcul de microprocesseur pour la réalisation de calculs complexes, etc.

Un utilisateur souhaitant réaliser une application particulière peut ne pas disposer des ressources nécessaires pour la réalisation de l'application. Il s'agit, par exemple, de la mise en place d'une messagerie téléphonique automatique pour une entreprise, ou de la sauvegarde automatique dans une mémoire distante de données stockées sur l'ensemble des ordinateurs d'une entreprise, etc.

Un serveur qui dispose des ressources nécessaires pour la mise en oeuvre de telles applications peut les mettre à disposition contre paiement. Des utilisateurs souhaitant disposer d'une certaine quantité des ressources du serveur lui transmettent des requêtes d'allocation de ressources. Selon la disponibilité des ressources, le serveur peut répondre favorablement ou non aux requêtes.

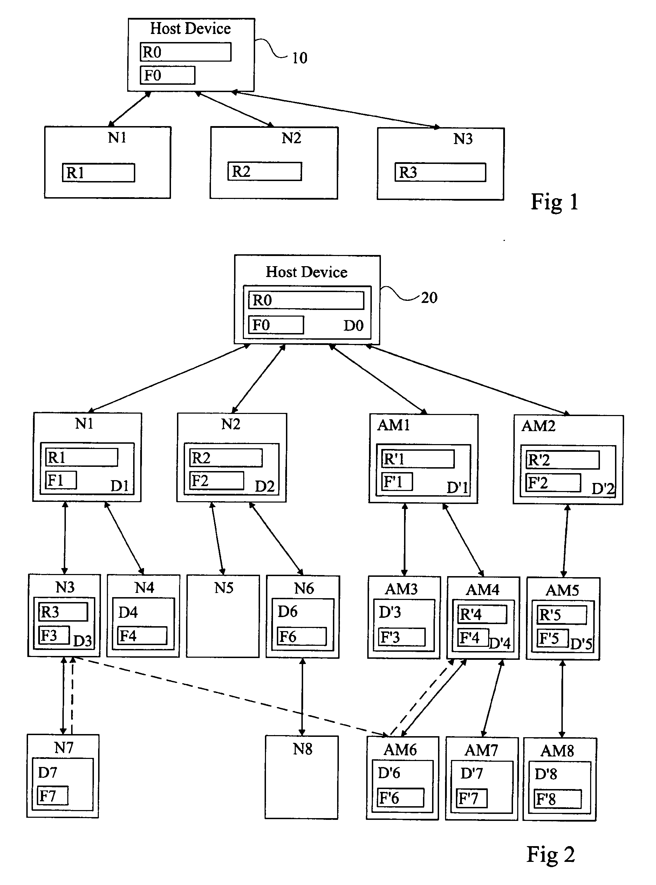

La figure 1 représente, de façon schématique sous forme d'un schéma par blocs, un exemple d'allocation classique de ressources mises à disposition par un serveur de ressources (Host Device) 10. Des utilisateurs Ni (i=1 à 3 dans l'exemple illustré) sont liés au serveur 10 et sont susceptibles de lui transmettre des requêtes d'allocation de ressources.

Selon un premier mode d'allocation, le serveur 10 réserve une certaine quantité fixe Ri de ressources de façon permanente à chaque utilisateur Ni, par exemple contre le paiement régulier d'une somme fixe. Les ressources mises à disposition par le serveur 10 se divisent alors entre une quantité R0 de ressources réservées égale à la somme des ressources réservées R1, R2, R3 aux utilisateurs N1, N2, N3 et une quantité F0 de ressources libres non réservées à un utilisateur particulier.

Selon un second mode d'allocation, les ressources libres F0 peuvent être allouées de façon temporaire à un utilisateur Ni sur requête contre le paiement d'une somme qui dépend par exemple de la durée de l'allocation. L'allocation des ressources libres F0 est alors limitée à la durée d'utilisation de ces ressources par l'utilisateur Ni, les ressources libres allouées redevenant ensuite disponibles pour d'autres utilisateurs N1, N2, N3. Les systèmes sont généralement conçus pour que le coût de l'allocation de ressources libres F0 soit plus élevé que le coût de réservation de ressources.

Lorsqu'un utilisateur Ni transmet au serveur 10 une requête d'allocation de ressources, le serveur 10 détermine si la quantité Ri de ressources réservées à l'utilisateur Ni, et qui n'est pas déjà utilisée par celui-ci, permet de satisfaire la requête. Si la quantité Ri de ressources réservées à l'utilisateur Ni est inférieure à la quantité demandée, le serveur 10 détermine s'il dispose suffisamment de ressources libres F0, non déjà allouées, pour satisfaire la requête. Dans l'affirmative, le serveur 10 alloue des ressources libres F0 à l'utilisateur Ni. Lorsque le serveur 10 ne peut satisfaire la requête d'allocation d'un utilisateur Ni, la quantité Ri de ressources réservées à l'utilisateur Ni et la quantité F0 de ressources libres, non déjà allouées, étant insuffisantes, il lui transmet un message lui indiquant que la requête est refusée.

Un tel procédé d'allocation présente plusieurs inconvénients.

Dans le cas où un utilisateur Ni n'a pas régulièrement besoin d'une quantité importante de ressources, l'utilisateur Ni souhaite généralement réserver seulement une quantité limitée Ri de ressources et utiliser les ressources libres F0 du serveur 10 lorsqu'il a besoin d'une quantité de ressources plus importante que d'habitude. Toutefois, le serveur 10 ne peut assurer à un utilisateur Ni que les ressources libres F0 seront toujours en quantité suffisante pour répondre à ses requêtes d'allocation. En effet, l'ordre d'allocation des ressources libres F0 suit généralement l'ordre de réception de requêtes d'allocation par le serveur 10. Les ressources libres F0 peuvent alors être monopolisées par le premier demandeur qui transmet une requête au serveur 10.

En outre, lorsqu'un utilisateur Ni n'utilise pas de façon régulière la totalité des ressources Ri qui lui sont réservées, il existe un manque à gagner pour le serveur 10. En effet, les ressources réservées R1, R2, R3 non utilisées par l'utilisateur N1, N2, N3 pourraient être allouées à d'autres utilisateurs, par exemple en tant que ressources libres F0 à un tarif plus élevé.

De plus, lorsqu'un utilisateur Ni n'utilise pas de façon régulière la totalité des ressources Ri qui lui sont réservées, les procédés d'allocation de ressources habituels ne lui permettent pas facilement de sous-louer une partie des ressources qui lui sont réservées à d'autres utilisateurs.

La présente invention vise à proposer un dispositif hôte destiné à allouer des ressources informatiques, électroniques et/ou de communication à des utilisateurs pour lequel la disponibilité des ressources libres est améliorée.

La présente invention vise à proposer un dispositif d'allocation de ressource dans lequel la répartition des ressources réservées entre plusieurs utilisateurs est facilement modulable.

La présente invention vise également à proposer un procédé d'allocation de ressources permettant d'améliorer la disponibilité des ressources libres de façon à satisfaire au mieux une requête d'allocation d'un utilisateur.

La présente invention vise également à proposer un procédé d'allocation de ressource permettant de répartir de façon facilement modulable les ressources réservées entre plusieurs utilisateurs.

Dans ce but, la présente invention prévoit un dispositif hôte comportant des ressources informatiques, électroniques et/ou de communication, destiné à être relié à des utilisateurs et à allouer une quantité déterminée de ressources à l'un des utilisateurs ayant transmis une requête d'allocation, comprenant parmi lesdites ressources, des premières ressources réservées aux utilisateurs ; parmi lesdites ressources, des secondes ressources réparties en zones de ressources ; pour chaque utilisateur parmi certains des utilisateurs, un pointeur désignant un autre utilisateur ou une zone de ressources ; pour chaque zone de ressources parmi certaines des zones de ressources, un pointeur désignant une autre zone de ressources ; et un moyen pour allouer des ressources disponibles parmi les ressources réservées à l'utilisateur ou à la zone de ressources désigné par le pointeur associé à l'utilisateur ayant émis la requête dans le cas où la quantité de ressources disponibles parmi les ressources réservées audit utilisateur ayant émis la requête est inférieure à la quantité déterminée, et, dans le cas où la requête d'allocation n'est toujours pas satisfaite, pour allouer successivement des ressources disponibles parmi les ressources réservées à l'utilisateur ou à la zone de ressources désigné par le pointeur associé à l'utilisateur ou à la zone de ressources précédemment désigné jusqu'à satisfaire la requête d'allocation ou émettre un message de refus d'allocation.

Selon un mode de réalisation de la présente invention, différents niveaux de priorité sont associés aux utilisateurs, des ressources étant réservées aux utilisateurs du niveau de priorité le plus élevé, les ressources réservées à un utilisateur d'un niveau de priorité déterminé étant divisées en ressources réservées à certains des utilisateurs du niveau de priorité inférieur, en ressources en cours d'utilisation et en ressources disponibles.

Selon un mode de réalisation de la présente invention, différents niveaux de priorité sont associés aux zones de ressources, des ressources étant réservées aux zones de ressources du niveau de priorité le plus élevé, les ressources réservées à une zone de ressources d'un niveau de priorité déterminé étant divisées en ressources réservées à certaines des zones de ressources du niveau de priorité inférieur, et en ressources disponibles.

Selon un mode de réalisation de la présente invention, un pointeur désignant le dispositif hôte est associé à au moins un utilisateur et à au moins une zone de ressources.

La présente invention prévoit également un procédé d'allocation de ressources informatiques, électroniques et/ou de communication d'un dispositif hôte à un utilisateur parmi plusieurs utilisateurs, ledit utilisateur transmettant au dispositif hôte une requête d'allocation d'une quantité déterminée des ressources, dans lequel une première portion des ressources du dispositif hôte est réservée aux utilisateurs et une seconde portion des ressources du dispositif hôte est répartie en zones de ressources, à chaque utilisateur parmi certains des utilisateurs étant associé un pointeur désignant un autre utilisateur ou une zone de ressources et à chaque zone de ressources parmi certaines des zones de ressources étant associé un pointeur désignant une autre zone de ressources, et comportant les étapes consistant, dans le cas où la quantité de ressources disponibles parmi les ressources réservées audit utilisateur ayant émis la requête est inférieure à la quantité déterminée, à allouer des ressources disponibles parmi les ressources réservées à l'utilisateur ou à la zone de ressources désigné par le pointeur associé à l'utilisateur ayant émis la requête ; et dans le cas où la requête d'allocation n'est toujours pas satisfaite, à allouer successivement des ressources disponibles parmi les ressources réservées à l'utilisateur ou à la zone de ressources désigné par le pointeur associé à l'utilisateur ou à la zone de ressources précédemment désigné jusqu'à satisfaire la requête d'allocation ou émettre un message de refus d'allocation.

Selon un mode de réalisation de la présente invention, le dispositif hôte transmet à l'utilisateur ayant émis la requête un message de refus d'allocation lorsque la quantité de ressources disponibles parmi les ressources réservées au dernier utilisateur désigné ou la quantité de ressources disponibles de la dernière zone de ressources désignée est insuffisante pour satisfaire la requête d'allocation et qu'aucun pointeur n'est associé audit dernier utilisateur désigné ou à ladite dernière zone de ressources désignée.

Selon un mode de réalisation de la présente invention, le dispositif hôte transmet à l'utilisateur ayant émis la requête un message de refus d'allocation lorsque ledit dispositif hôte est désigné et que les ressources disponibles du dispositif hôte distinctes des premières et secondes ressources sont insuffisantes pour satisfaire la requête d'allocation.

Selon un mode de réalisation de la présente invention, l'utilisateur désigné par un pointeur ou la zone de ressources désignée par un pointeur dépend de l'utilisateur ayant émis la requête d'allocation.

Ces objets, caractéristiques et avantages, ainsi que d'autres de la présente invention seront exposés en détail dans la description suivante de modes de réalisation particuliers faite à titre non limitatif en relation avec les figures jointes parmi lesquelles :
la figure 1, précédemment décrite, illustre de façon schématique sous forme d'un schéma par blocs, un procédé classique d'allocation de ressources informatiques, électroniques et/ou de communication ; et
la figure 2 illustre, de façon schématique sous forme d'un schéma par blocs, un exemple de réalisation du procédé d'allocation de ressources informatiques, électroniques et/ou de communication selon l'invention.

La figure 2 représente un serveur 20 (Host Device) mettant à la disposition d'utilisateurs, Ni (i=1 à 8 dans l'exemple représenté), des ressources informatiques, électroniques et/ou de communication D0. Comme cela a été expliqué précédemment, les ressources peuvent consister en de la bande passante pour la transmission de signaux électromagnétiques, de la mémoire pour le stockage de données, des ports téléphoniques pour la transmission de messages vocaux, de la charge de calcul de microprocesseur pour la réalisation de tâches complexes, etc. Le serveur 20 dispose de tous les moyens matériels et logiciels nécessaires pour pouvoir allouer les ressources mises à disposition. Il dispose notamment de moyens pour échanger des données avec les utilisateurs N1 à N8, par exemple au moyen de bus et de terminaux d'accès.

Selon la présente invention, des données caractéristiques associées à chaque utilisateur Ni sont stockées par le serveur 20 de façon que, vus du côté du serveur 20, les utilisateurs N1 à N8 sont répartis en un réseau selon plusieurs niveaux de priorité. Les utilisateurs N1, N2 du niveau de priorité le plus élevé sont directement liés au serveur 20. Chaque utilisateur N3 à N6 du niveau de priorité inférieur au niveau de priorité le plus élevé est lié à l'un des utilisateurs N1, N2 du niveau de priorité le plus élevé. Les utilisateurs N7, N8 sont respectivement liés aux utilisateurs N3 et N6. De façon générale, chaque utilisateur d'un niveau de priorité déterminé du réseau est lié à l'un des utilisateurs du niveau de priorité supérieur.

Parmi la totalité des ressources D0 mises à disposition par le serveur 20, des ressources Dj sont réservées pour les utilisateurs Nj (j=1 ou 2) du niveau de priorité le plus élevé. Pour chaque utilisateur Nj du niveau de priorité le plus élevé, les ressources Dj sont divisées en une quantité Rj de ressources réservées aux utilisateurs N3, N4, N5, N6 du niveau de priorité inférieur auxquels l'utilisateur Nj est lié et une quantité de ressources libres Fj pouvant être utilisées par l'utilisateur lui-même et, dans certains cas, par un autre utilisateur d'un niveau de priorité inférieur comme cela sera expliqué par la suite.

De façon générale, pour chaque utilisateur N1, N2, N3, N4, N6, N7 d'un niveau de priorité déterminé pour lequel des ressources D1, D2, D3, D4, D6, D7 sont réservées par le serveur 20 ou un utilisateur du niveau de priorité supérieur, ces ressources se divisent en une quantité R1, R2, R3, R4, R6, R7 de ressources réservées aux utilisateurs du niveau de priorité inférieur auxquels l'utilisateur est lié et une quantité F1, F2, F3, F4, F6, F7 de ressources libres pouvant être utilisées par l'utilisateur lui-même, et, dans certains cas, par un autre utilisateur d'un niveau de priorité inférieur comme cela sera expliqué par la suite.

Dans le réseau d'utilisateurs, N1 à N8, représenté à titre d'exemple, les utilisateurs N5 et N8 n'ont pas de ressources qui leur sont réservées par les utilisateurs N2, N6 du niveau de priorité supérieur auxquels ils sont respectivement liés. Les utilisateurs N4, N7 ne sont pas liés à un utilisateur du niveau de priorité inférieur et comportent des ressources D4, D7 qui leur sont réservées par les utilisateurs N1, N3 du niveau de priorité supérieur auxquels ils sont respectivement liés. Dans ce cas, la totalité des ressources D4, D7 qui leur sont réservées sont des ressources libres F4, F7. L'utilisateur N6 comprend des ressources D6 qui lui sont réservées par l'utilisateur N2 du niveau de priorité supérieur auquel il est lié. Aucune partie de ces ressources D6 n'est réservée à l'utilisateur N8 auquel l'utilisateur N6 est lié. La totalité des ressources D6 correspond donc à des ressources libres F6.

La réservation de ressources par un utilisateur peut correspondre au paiement à échéance régulière d'une somme fixe. L'allocation temporaire de ressources libres peut correspondre au paiement d'une somme qui dépend, par exemple, de la durée de l'allocation ou de la quantité de ressources libres allouées.

Une partie des ressources D0 mises à disposition par le serveur 20 est divisée en zones de ressources AMk où k=1 à 8 dans cet exemple. Toutefois, le nombre de zones de ressources AMk ne sera généralement pas égal au nombre d'utilisateurs. Chaque zone de ressource AMk est associée à des moyens matériels et logiciels pour la réalisation de fonctions particulières. Par exemple, lorsque les ressources fournies par le serveur 20 consistent en des ports téléphoniques, chaque zone de ressources AMk peut être associée à des moyens logiciels et matériels pour réaliser des connexions téléphoniques, des moyens de synthèse vocale pour fournir automatiquement des messages vocaux, etc.

Les zones de ressources AM1 à AM8 sont réparties selon un réseau à niveaux de priorité distincts comme le réseau des utilisateurs N1 à N8. Le serveur 20 réserve une partie des ressources disponibles D'1, D'2 aux zones de ressources AM1, AM2 du niveau de priorité le plus élevé. Pour chaque zone de ressources AMl, l=1, 2, 4 ou 5, d'un niveau de priorité déterminé lié à une ou plusieurs zones de ressources du niveau de priorité inférieur, la quantité de ressources D'l disponibles au niveau de la zone de ressources est répartie entre une quantité R'l de ressources réservées pour la ou les zones de ressources du niveau de priorité inférieur auxquelles la zone de ressources est liée et une quantité F'j de ressources libres pouvant être utilisées par la zone de ressources elle-même, et, dans certains cas, par une autre zone de ressources ou par un utilisateur comme cela sera expliqué par la suite. Pour chaque zone de ressources AMp, p=5, 6, 7 ou 8, d'un niveau de priorité déterminé non liée à une zone de ressources du niveau de priorité inférieur, la quantité D'p de ressources disponibles au niveau de la zone de ressources correspond en totalité à des ressources libres F'p pouvant être utilisées par la zone de ressources elle-même, et, dans certains cas, par une autre zone de ressources ou par un utilisateur comme cela sera expliqué par la suite.

Au niveau du serveur 20, les ressources disponibles D0 se divisent donc en des ressources réservées R0 égales à la somme des ressources réservées D1, D2 aux utilisateurs, N1 à N8, et des ressources réservées D'1, D'2 aux zones de ressources, AM1 à AM8. Le reste des ressources disponibles du serveur 20 correspond à des ressources libres F0 qui peuvent être allouées sur requête à un utilisateur, N1 à N8.

A chaque utilisateur, N1 à N8, est associé un pointeur qui détermine un chemin d'accès vers un autre utilisateur du réseau d'utilisateurs ou vers une zone de ressources AM1 à AM8. A titre d'exemple, le pointeur d'un utilisateur d'un niveau de priorité déterminé désigne une zone de ressources d'un niveau de priorité quelconque ou l'utilisateur du niveau de priorité supérieur auquel il est lié. En particulier, le pointeur d'un utilisateur N1, N2 du niveau de priorité le plus élevé désigne une zone de ressources, AM1 à AM8, ou le serveur 20.

A chaque zone de ressources, AM1 à AM8, est associé un pointeur qui détermine un chemin d'accès vers une autre zone de ressources du réseau de zones de ressources. A titre d'exemple, le pointeur d'une zone de ressources d'un niveau de priorité déterminé désigne la zone de ressources du niveau de priorité supérieur auquel elle est liée. Le pointeur d'une zone de ressources AM1, AM2 du niveau de priorité le plus élevé désigne le serveur 20.

Le procédé d'allocation de ressources selon la présente invention est le suivant.

Lorsqu'un utilisateur initial, N1 à N8, souhaite effectuer une fonction déterminée, il transmet au serveur 20 une requête d'allocation de la quantité de ressources nécessaire pour réaliser la fonction. Il peut s'agir par exemple de la réalisation d'un appel téléphonique, la ressource étant alors un port téléphonique. Il peut s'agir de l'exécution d'un calcul complexe, la ressource étant alors une charge de calcul de microprocesseur.

Le serveur 20 détermine alors si l'utilisateur initial, N1 à N8, dispose des ressources libres F1, F2, F3, F4, F6, F7 nécessaires pour réaliser la fonction souhaitée.

Si la quantité F1, F2, F3, F4, F6, F7 de ressources libres, non déjà allouées par ailleurs, dont dispose l'utilisateur initial N1, N2, N3, N4, N6, N7 est suffisante, ces ressources sont directement allouées à l'utilisateur. Dans le cas où la quantité de ressources libres non déjà allouées par ailleurs dont dispose l'utilisateur initial n'est pas suffisante, le serveur 20 alloue la quantité de ressources libres disponibles et lit le pointeur de l'utilisateur initial qui désigne un utilisateur intermédiaire ou une zone de ressources intermédiaire. Dans le cas où l'utilisateur initial (N5, N8) ne dispose pas de ressources libres, le serveur 20 lit directement le pointeur de l'utilisateur initial qui désigne un utilisateur intermédiaire ou une zone de ressources intermédiaire.

Le serveur 20 examine alors si l'utilisateur intermédiaire ou la zone de ressources intermédiaire dispose de ressources libres en quantité suffisante pour satisfaire la requête d'allocation de l'utilisateur initial. Dans l'affirmative, le serveur 20 alloue la quantité nécessaire à l'utilisateur initial pour satisfaire la requête d'allocation. Dans la négative, le serveur 20 alloue à l'utilisateur initial, si cela est possible, la quantité de ressources libres disponibles au niveau de l'utilisateur intermédiaire ou de la zone de ressources intermédiaire et lit le pointeur de l'utilisateur intermédiaire ou de la zone de ressources intermédiaire. Le serveur 20 répète alors, pour le nouvel utilisateur intermédiaire désigné ou la nouvelle zone de ressources désignée, l'examen précédemment décrit.

Un exemple du "trajet" suivi par le serveur 20 pour la recherche de ressources de façon à satisfaire une requête d'allocation émise par l'utilisateur N7 est représenté en figure 2 par une flèche en pointillés. Dans cet exemple, la quantité de ressources libres F7 non déjà utilisée de l'utilisateur N7 n'est pas suffisante pour exécuter la fonction souhaitée par l'utilisateur N7. L'utilisateur N3 est désigné par le pointeur de l'utilisateur N7. Le serveur 20 examine donc si l'utilisateur N3 dispose de ressources libres F3 en quantité suffisante pour satisfaire la requête d'allocation de ressources de l'utilisateur N7. De façon analogue, le serveur 20 détermine alors s'il peut trouver successivement auprès de la zone de ressources AM6, désignée par le pointeur de l'utilisateur N7, et de la zone de ressources AM4, désignée par le pointeur de la zone de ressources AM6, suffisamment de ressources libres disponibles pour satisfaire la requête d'allocation de l'utilisateur N7.

Le procédé d'allocation de ressources selon l'invention s'interrompt lorsque l'utilisateur, N1 à N8, ou la zone de ressources, AM1 à AM8, désigné par le pointeur, dispose de ressources libres en quantité suffisante pour satisfaire la requête d'allocation de l'utilisateur initial. Le procédé d'allocation de ressources selon l'invention s'interrompt également lorsque l'utilisateur ou la zone de ressources, désigné par le pointeur, ne dispose pas d'une quantité de ressources libres suffisante et ne dispose pas d'un pointeur indiquant un autre utilisateur ou une autre zone de ressources. Dans ce cas, un message d'impossibilité d'allocation de ressources est transmis par le serveur 20 à l'utilisateur initial. Une autre possibilité d'arrêt survient lorsque le serveur 20 est désigné par un pointeur et que les ressources libres F0 du serveur 20 sont insuffisantes pour satisfaire la requête d'allocation de l'utilisateur initial.

Selon une variante de l'invention, les pointeurs des utilisateurs et des zones de ressources sont paramétrés en fonction de l'utilisateur initial ayant émis la requête d'allocation. Ainsi, en fonction de l'utilisateur initial, le pointeur désigne un utilisateur particulier ou une zone de ressources particulière. Les pointeurs peuvent également être modifiés en fonction d'autre paramètres comme l'instant où une requête est reçue par le serveur. Ceci permet notamment de prendre en compte une durée particulière pendant laquelle de mêmes utilisateurs émettent de nombreuses requêtes, des heures de pointes quotidiennes, etc.

La présente invention permet d'améliorer efficacement la disponibilité des ressources mises à disposition par le serveur. En effet, les pointeurs des utilisateurs et des zones de ressources permettent de limiter la recherche de ressources disponibles au niveau de certains utilisateurs ou zones de ressources en fonction de l'utilisateur ayant émis la requête. Il est alors possible de répartir au mieux les ressources du serveur entre les utilisateurs et plus particulièrement entre les zones de ressources pour éviter l'accaparement d'une quantité trop importante de ressources libres par un même utilisateur.

En outre, l'utilisation de niveaux de priorité entre les utilisateurs permet à un utilisateur de sous-louer facilement une partie des ressources qui lui sont réservées à d'autres utilisateurs. En effet, la répartition des ressources entre les utilisateurs peut être facilement modifiée par le changement de paramètres mémorisés au niveau du serveur.

## Revendications

1. Dispositif hôte (20) comportant des ressources informatiques, électroniques et/ou de communication (D0), destiné à être relié à des utilisateurs et à allouer une quantité déterminée de ressources à l'un des utilisateurs (N1, N2, N3, N4, N5, N6, N7, N8) ayant transmis une requête d'allocation, **caractérisé en ce qu'**il comprend :
parmi lesdites ressources, des premières ressources (D1, D2, D3, D4, D6, D7) réservées aux utilisateurs ;
parmi lesdites ressources, des secondes ressources réparties en zones de ressources (AM'1, AM'2, AM'3, AM'4, AM'7, AM'6, AM'7, AM'8) ;
pour chaque utilisateur parmi certains des utilisateurs, un pointeur désignant un autre utilisateur ou une zone de ressources ;
pour chaque zone de ressources parmi certaines des zones de ressources, un pointeur désignant une autre zone de ressources ; et
un moyen pour allouer des ressources disponibles parmi les ressources réservées à l'utilisateur ou à la zone de ressources désigné par le pointeur associé à l'utilisateur ayant émis la requête dans le cas où la quantité de ressources disponibles parmi les ressources réservées audit utilisateur ayant émis la requête est inférieure à la quantité déterminée, et, dans le cas où la requête d'allocation n'est toujours pas satisfaite, pour allouer successivement des ressources disponibles parmi les ressources réservées à l'utilisateur ou à la zone de ressources désigné par le pointeur associé à l'utilisateur ou à la zone de ressources précédemment désigné jusqu'à satisfaire la requête d'allocation ou émettre un message de refus d'allocation.

2. Dispositif (20) selon la revendication 1, dans lequel différents niveaux de priorité sont associés aux utilisateurs (N1, N2, N3, N4, N5, N6, N7, N8), des ressources (D1, D2) étant réservées aux utilisateurs (N1, N2) du niveau de priorité le plus élevé, les ressources réservées à un utilisateur d'un niveau de priorité déterminé étant divisées en ressources réservées à certains des utilisateurs du niveau de priorité inférieur, en ressources en cours d'utilisation et en ressources disponibles.

3. Dispositif (20) selon la revendication 1, dans lequel différents niveaux de priorité sont associés aux zones de ressources (AM1, AM2, AM3, AM4, AM5, AM6, AM7, AM8), des ressources (D'1, D'2) étant réservées aux zones de ressources (AM1, AM2) du niveau de priorité le plus élevé, les ressources réservées à une zone de ressources d'un niveau de priorité déterminé étant divisées en ressources réservées à certaines des zones de ressources du niveau de priorité inférieur, et en ressources disponibles.

4. Dispositif (20) selon la revendication 1, dans lequel un pointeur désignant le dispositif hôte (20) est associé à au moins un utilisateur et à au moins une zone de ressources.

5. Procédé d'allocation de ressources informatiques, électroniques et/ou de communication d'un dispositif hôte (20) à un utilisateur (Ni) parmi plusieurs utilisateurs (N1, N2, N3, N4, N5, N6, N7, N8), ledit utilisateur transmettant au dispositif hôte une requête d'allocation d'une quantité déterminée des ressources,
**caractérisé en ce qu'**une première portion des ressources du dispositif hôte est réservée aux utilisateurs (D1, D2, D3, D4, D6, D7) et une seconde portion des ressources du dispositif hôte est répartie en zones de ressources (AM1, AM2, AM3, AM4, AM7, AM6, AM7, AM8), à chaque utilisateur parmi certains des utilisateurs étant associé un pointeur désignant un autre utilisateur ou une zone de ressources et à chaque zone de ressources parmi certaines des zones de ressources étant associé un pointeur désignant une autre zone de ressources,
et **en ce qu'**il comporte les étapes suivantes :
dans le cas où la quantité de ressources disponibles parmi les ressources réservées audit utilisateur ayant émis la requête est inférieure à la quantité déterminée, allouer des ressources disponibles parmi les ressources réservées à l'utilisateur ou à la zone de ressources désigné par le pointeur associé à l'utilisateur ayant émis la requête ; et
dans le cas où la requête d'allocation n'est toujours pas satisfaite, allouer successivement des ressources disponibles parmi les ressources réservées à l'utilisateur ou à la zone de ressources désigné par le pointeur associé à l'utilisateur ou à la zone de ressources précédemment désigné jusqu'à satisfaire la requête d'allocation ou émettre un message de refus d'allocation.

6. Procédé selon la revendication 5, dans lequel le pointeur d'au moins un utilisateur et d'au moins une zone de ressources désigne le dispositif hôte (20).

7. Procédé selon la revendication 5, dans lequel le dispositif hôte (20) transmet à l'utilisateur (N1, N2, N3, N4, N5, N7, N8) ayant émis la requête un message de refus d'allocation lorsque la quantité de ressources disponibles parmi les ressources réservées (D1, D2, D3, D4, D6, D7) au dernier utilisateur désigné ou la quantité de ressources disponibles de la dernière zone de ressources (AM1, AM2, AM3, AM4, AM5, AM6, AM7, AM8) désignée est insuffisante pour satisfaire la requête d'allocation et qu'aucun pointeur n'est associé audit dernier utilisateur désigné ou à ladite dernière zone de ressources désignée.

8. Procédé selon la revendication 5, dans lequel le dispositif hôte (20) transmet à l'utilisateur ayant émis la requête un message de refus d'allocation lorsque ledit dispositif hôte est désigné et que les ressources disponibles du dispositif hôte distinctes des premières et secondes ressources sont insuffisantes pour satisfaire la requête d'allocation.

9. Procédé selon la revendication 5, dans lequel l'utilisateur (N1, N2, N3, N4, N5, N6, N7, N8) désigné par un pointeur ou la zone de ressources (F'1, F'2, F'3, F'4, F'7, F'6, F'7, F'8) désignée par un pointeur dépend de l'utilisateur ayant émis la requête d'allocation.
